# EUROPÄISCHE PATENTANMELDUNG

(11) **EP 4 610 203 A1**
(43) Veröffentlichungstag der Anmeldung: **03.09.2025**
(21) Anmeldenummer: 24160307.5
(22) Anmeldetag: 28.02.2024
(51) Int. Cl.: B65G 54/02

(54) **FÖRDEREINRICHTUNG UND FÖRDERVERFAHREN**

(71) Anmelder: Rotzinger PharmaPack GmbH, 71332 Waiblingen (DE)
(72) Erfinder: Maiwald, Andreas, 83101 Rohrdorf (DE)
(74) Vertreter: Braunpat AG

(57) **Zusammenfassung**

Eine Fördereinrichtung und ein Förderverfahren zum Fördern von Einzelprodukten entlang einer Förderstrecke weist wenigstens eine Halteeinrichtung (5) zum Halten eines Einzelprodukts auf. Die Halteeinrichtung (5) umfasst ein erstes Halteteil (20) und ein zweites Halteteil (30), die relativ zueinander zwischen einer Halteposition und einer Freigabeposition beweglich sind. Die Förderstrecke weist eine erste Antriebsschiene (10) und eine zweite Antriebsschiene (12) auf, die parallel verlaufend angeordnet sind. Das erste Halteteil (20) ist mit einem ersten Antrieb (40) entlang der ersten Antriebsschiene (10) und das zweite Halteteil (30) ist mit einem zweiten Antrieb (50) entlang der zweiten Antriebsschiene (12) verfahrbar. Der erste Antrieb (40) und der zweite Antrieb (50) werden mittels einer Steuereinheit derart gesteuert, dass das erste Halteteil (20) und das zweite Halteteil (30) relativ zueinander zwischen der Halteposition und der Freigabeposition beweglich und in der Halteposition gemeinsam entlang der Förderstrecke beweglich sind.

## Beschreibung

### Technisches Gebiet der Erfindung

Die vorliegende Erfindung betrifft eine Fördereinrichtung und ein Förderverfahren zum Fördern von Einzelprodukten entlang einer Förderstrecke, wobei wenigstens eine Halteeinrichtung zum Halten wenigstens eines Einzelprodukts vorgesehen ist, die entlang einer Antriebsschiene beweglich gelagert und mittels eines Antriebs entlang der Förderstrecke antreibbar ist. Insbesondere betrifft die Erfindung eine Fördereinrichtung und ein Förderverfahren zum Fördern von Behältern, insbesondere flaschenartigen Behältern, die entlang einer umlaufenden Förderstrecke gefördert werden.

### Stand der Technik

Zur Produktion von Industrieerzeugnissen werden oftmals automatisierte Produktionslinien verwendet, wie etwa in der pharmazeutischen Industrie und verwandten Gebieten. Dabei werden die Erzeugnisse zwischen mehreren in Serie oder parallel angeordneten Produktionseinheiten automatisch transportiert. Beispielsweise sind Einheiten zur Rohstoffzufuhr, Substanzherstellung, Mischung von Formulierungen, Formgebung, Qualitätskontrolle, Bereitstellung von Verpackungen, Reinigung, Wägung, Etikettierung, etc. vorgesehen. Für einen Transfer von Einzelprodukten, wie z. B. Endprodukten, Zwischenprodukten, Verpackungsmaterial, etc., zwischen den Produktionseinheiten werden automatisierte Transportanlagen mit mehreren Fördereinrichtungen, wie etwa Förderbänder, verwendet. Dabei sind die Fördereinrichtungen mit Mitnehmern ausgestattet, welche entlang einer Förderstrecke der Fördereinrichtung angetrieben werden und dabei wenigstens ein Einzelprodukt mitnehmen. Die Mitnehmer können z. B. als Schieber, Schalen, Greifer, Klemmen oder dergleichen ausgebildet sein.

Aus der WO 2016/189485 A1 ist beispielsweise eine Fördereinrichtung bekannt, bei der Halteeinrichtungen in Form von Haltehülsen für Stückgut entlang einer umlaufenden Förderstrecke mit zwei parallel verlaufenden linearen Abschnitten und zwei gebogenen Umlenkabschnitten gefördert werden. Die Fördereinrichtung weist zwei übereinander angeordnete Förderbänder auf, die um Umlenktrommeln in den Umlenkabschnitten geführt sind und jeweils unabhängig voneinander mittels Motoren an den Umlenktrommeln angetrieben werden. Am oberen Förderband ist eine erste Gruppe von Haltehülsen und am unteren Förderband ist eine zweite Gruppe von Haltehülsen angeordnet, die entlang der Förderstrecke transportiert werden können. Die Haltehülse sind für ein sicheres Festhalten von Produkten nicht geeignet. Ferner können Haltehülsen einer Gruppe nur gemeinsam bewegt werden. Es ist kein individueller Antrieb einzelner Haltehülsen möglich.

In der EP 3038959 B1 ist eine umlaufende Transportvorrichtung gezeigt, die eine feststehende Führungsschiene aufweist, an der mehrere Transporteinheiten in Form von Schiebern mittels Rollen geführt sind. Die Transporteinheiten sind durch einen elektromagnetischen Linearmotor angetrieben, der eine feststehende Statoreinheit parallel zur Führungsschiene und Permanentmagnete an den Transporteinheiten umfasst. Die Transporteinheit weist einen U-förmigen Grundkörper auf, der sich um die Statoreinheit erstreckt, so dass je ein Permanentmagnet beidseitig der Statoreinheit angeordnet ist. Durch eine entsprechende Steuerung des Linearmotors sind die Transporteinheiten unabhängig voneinander entlang der Führungsschiene verfahrbar, wobei ein Produkt von dem Schieber vor sich hergeschoben wird. Eine Umkehr der Bewegungsrichtung ist nicht möglich. Ferner werden die Produkte nicht sicher gehalten, wodurch es insbesondere in den Umkehrabschnitten zu Ausfällen kommen kann.

Weiter sind Fördereinrichtung mit Halteeinrichtungen in Form von Greifern bekannt, insbesondere zum Transportieren von Behältern beispielsweise in Form von Flaschen. Dabei weisen die Greifer zwei relativ zueinander bewegliche Greifbacken auf, die einen Behälter zwischen sich festklemmen. Aus DE 20 2005 021 936 U1 ist z. B. ein Greifer bekannt, bei dem die Greifbacken durch magnetisch zusammenwirkende Permanentmagnete mit einer Haltekraft beaufschlagt sind. Weitere Greifer für Fördereinrichtungen sind z. B. aus WO 2023/078629 A1 und EP 3613583 A1 bekannt. Allen diesen Greifern ist eine komplexe Mechanik und aufwendige Antriebssteuerung gemeinsam, wodurch die Konstruktion einer Fördereinrichtung verkompliziert wird.

Es ist daher eine Aufgabe der vorliegenden Erfindung eine Fördereinrichtung und ein Förderverfahren zum Fördern von Einzelprodukten entlang einer Förderstrecke zu schaffen, die einen einfachen Aufbau aufweisen, einen geringen Steueraufwand erfordern, einen individuellen Transport von Einzelprodukten erlauben, für unterschiedliche Grössen von Einzelprodukten geeignet sind und ein sicheres Halten der Einzelprodukte während des Transports gewährleisten.

### Zusammenfassung der Erfindung

Diese Aufgabe wird von der Erfindung durch eine Fördereinrichtung nach Anspruch 1 und ein Förderverfahren nach Anspruch 14 gelöst. Vorteilhafte Ausgestaltungen und Ausführungsbeispiele sind in den abhängigen Ansprüchen beschrieben.

Die Fördereinrichtung nach der vorliegenden Erfindung ist zum Fördern von Einzelprodukten entlang einer Förderstrecke ausgelegt und weist hierfür wenigstens eine Halteeinrichtung zum Halten eines Einzelprodukts auf. Die Förderstrecke weist eine erste Antriebsschiene und eine zweite Antriebsschiene auf, die parallel verlaufend angeordnet sind. Die Halteeinrichtung umfasst ein erstes Halteteil und ein zweites Halteteil, die relativ zueinander zwischen einer Halteposition und einer Freigabeposition beweglich sind. Hierfür ist das erste Halteteil mit einem ersten Antrieb entlang der ersten Antriebsschiene und das zweite Halteteil mit einem zweiten Antrieb entlang der zweiten Antriebsschiene verfahrbar. Der erste Antrieb und der zweite Antrieb sind mittels einer Steuereinheit derart steuerbar und aufeinander abstimmbar, dass das erste Halteteil und das zweite Halteteil relativ zueinander zwischen der Halteposition und der Freigabeposition beweglich sind. Hierfür steuert die Steuereinheit den ersten und den zweiten Antrieb derart, dass sich ein Abstand zwischen den Halteteilen verringert, bzw. vergrössert, um eine Halteposition, bzw. eine Freigabeposition zu erreichen. Beispielsweise bewegen sich die Halteteile in entgegengesetzten Richtungen oder eines der Halteteile entfernt sich vom anderen Halteteil oder nähert sich diesem an, während das andere Halteteil stillsteht. Weiter steuert die Steuereinheit den ersten und den zweiten Antrieb derart, dass das erste Halteteil und das zweite Halteteil in der Halteposition gemeinsam entlang der Förderstrecke beweglich sind. Dabei führen das erste und das zweite Halteteil somit keine Relativbewegung zueinander aus, sondern verfahren in zueinander gleich bleibender Position gleichzeitig entlang der Förderstrecke.

Somit steuert bei einem Förderverfahren nach der vorliegenden Erfindung die Steuereinrichtung den ersten Antrieb zum Antreiben des ersten Halteteils entlang der ersten Antriebsschiene und den zweiten Antrieb zum Antreiben des zweiten Halteteils entlang der zweiten Antriebsschiene insbesondere derart, dass die Halteteile synchron miteinander derart auf den Antriebsschienen verfahren werden, dass das Einzelprodukt zwischen dem ersten Halteteil und dem zweiten Halteteil in einer einen Klemmsitz ausbildendenden Halteposition gehalten wird.

Die Steuereinheit und die Antriebe sind beispielsweise als elektrische Einheiten ausgebildet. Zur Steuerung des ersten und des zweiten Antriebs sendet die Steuereinheit beispielsweise ein erstes elektrisches Steuersignal an den ersten Antrieb und ein zweites elektrisches Steuersignal an den zweiten Antrieb. Die Steuersignale aktivieren oder deaktivieren die Antriebe und bestimmen eine Antriebsleistung der Antriebe zum Einstellen einer Geschwindigkeit der Halteteile. Weiter kann die Steuereinheit beispielsweise eine Elektronik, bzw. eine Rechnereinheit zum Erstellen der Steuersignale gemäss einem Steueralgorithmus aufweisen, welcher zum Betrieb der Antriebe wie oben beschrieben ausgelegt ist.

In einer Ausführungsform umfasst die Fördereinrichtung zum Beispiel eine Sensorik mit einem ersten Wegmesssystem am ersten Antrieb und einem zweiten Wegmesssystem am zweiten Antrieb zur Positionsbestimmung und/oder Geschwindigkeitsbestimmung von erstem und zweitem Halteteil relativ zueinander. Mittels der Wegmesssysteme kann eine Stromaufnahme jedes Halteteils gemessen und darüber die Klemmkraft bestimmt werden. Damit kann die Halteposition und die Freigabeposition der Halteteile überwacht und gesteuert werden.

Ferner kann eine Sensorik mit einer ersten Sensoreinheit am ersten Halteteil und einer zweiten Sensoreinheit am zweiten Halteteil zumindest zur Positionsbestimmung von erstem und zweitem Halteteil relativ zueinander vorgesehen sein. Beispielsweise können die Sensoreinheiten optische Sensoren aufweisen, die auf ein gegenüberliegendes Halteteil und/oder eine Antriebsschiene referenzieren. Es ist auch möglich, dass eine oder mehrere Sensoreinheiten an der ersten Antriebsschiene und/oder zweiten Antriebsschiene zur Positionsbestimmung der Halteteile vorgesehen sind.

Die Steuereinrichtung kann ein erstes Sensorsignal vom ersten Wegmesssystem am ersten Antrieb oder von der ersten Sensoreinheit am ersten Halteteil bzgl. einer Position und/oder Geschwindigkeit des ersten Halteteils relative zur ersten Antriebsschiene und/oder relativ zum zweiten Halteteil und/oder ein zweites Sensorsignal vom zweiten Wegmesssystem am zweiten Antrieb oder von einer zweiten Sensoreinheit am zweiten Halteteil bzgl. einer Position und/oder Geschwindigkeit des zweiten Halteteils relative zur zweiten Antriebsschiene und/oder relativ zum ersten Halteteil empfangen und mittels der Sensorsignale eine Position und/oder Geschwindigkeit des ersten und des zweiten Halteteils derart abstimmt, dass eine Klemmkraft auf den Einzelbehälter erfolgt, wie oben erläutert. Die Messung der Wegmesssysteme kann als Feedback-Signal an die Steuereinheit übermittelt werden und zur Einstellung der Positionierung der Halteteil, bzw. des Antriebes der Halteteile dienen. Es ist auch möglich, dass die Sensorik Kraftsensoren an wenigstens einem der Halteteile umfasst, welche eine Kraftmessung ausführen und eine Klemmkraft an dem wenigstens einen Halteteil erfassen, die zur Steuerung dienen können.

Bei der Fördereinrichtung nach der Erfindung sind die Halteeinrichtung und deren Halteteile vorteilhaft unabhängig voneinander antreibbar. Insbesondere sind das erste Halteteil und das zweite Halteteil ohne Kontakt miteinander an der ersten, bzw. zweiten Antriebsschiene gelagert. Das heisst, es können mehrere Halteeinrichtungen unabhängig voneinander gefördert werden und Einzelprodukte in den Halteeinrichtungen können unabhängig voneinander freigegeben oder gehalten werden. Weiter können die Halteeinrichtungen flexibel auf unterschiedliche Grössen von Einzelprodukten angepasst werden, indem der Abstand zwischen den Halteteilen angepasst wird. Dabei können unterschiedliche Grössen und Formen von Einzelprodukten während der Förderung sicher gehalten und zuverlässig freigegeben werden.

In einer Ausgestaltung der Fördereinrichtung sind die erste Antriebsschiene und die zweite Antriebsschiene beispielsweise an einer gemeinsamen Tragstruktur zueinander feststehend vorgesehen. In einer vorteilhaften Ausgestaltung der Förderstrecke verlaufen die erste und zweite Antriebsschiene horizontal, so dass sich eine horizontale Förderrichtung ergibt. Weiter liegen die erste und die zweite Antriebsschiene vertikal übereinander, so dass sie gemeinsam eine vertikale Förderebene aufspannen. Grundsätzlich können die Antriebsschienen aber auch eine andere Ausrichtung haben, solange sie parallel verlaufen, so dass z. B. eine schräge oder auch vertikale Förderrichtung möglich ist.

Vorzugsweise ist die Förderstrecke der Fördereinrichtung als umlaufende Strecke ausgebildet, die beispielsweise zwei parallel verlaufende Linearsegmente und wenigstens zwei gebogene Umlenksegmente aufweist. Die Linearsegmente dienen zur Förderung der Einzelprodukte von einem Ort zu einem dazu entfernt gelegenen anderen Ort. Die Umlenksegmente dienen zur Umkehr der Bewegungsrichtung, obgleich die Halteeinrichtung in gleicher Förderrichtung angetrieben wird. Grundsätzlich können auch mehr als zwei Linearsegmente und Umlenksegmente vorgesehen werden, die je nach Aufbau einer Produktionslinie angeordnet werden können. Beispielsweise können drei Linearsegmente in einem Dreieck angeordnet werden und mit drei Umlenksegmenten verbunden sein. Bei einer Reihe von Halteeinrichtungen können diejenigen Halteeinrichtungen, die ein Produkt freigegeben haben, durch ein Umlaufen entlang der Förderstrecke hinten in der Reihe von Halteeinrichtungen angestellt werden, so dass diese zur Aufnahme weiterer Einzelprodukte bereit sind.

In einer vorteilhaften Ausgestaltung der Halteeinrichtung sind das erste Halteteil und das zweite Halteteil in einer Halteposition auf einer zur ersten Antriebsschiene und zur zweiten Antriebsschiene zumindest annähernd senkrechten Verbindungslinie angeordnet. Im Gegensatz dazu sind die Halteteile in einer Freigabeposition versetzt zueinander angeordnet. Insbesondere beim Durchlaufen eines Umlenksegments während dem Übergang von einem Linearsegment zum nächsten Linearsegment, kann die Halteposition der Halteteile sichergestellt werden, wenn die Halteeinrichtungen zumindest annähernd senkrecht übereinander an ihren Antriebsschienen zu liegen kommen.

In einer weiteren Ausgestaltung der Fördereinrichtung weisen das erste Halteteil einen ersten Haltearm und das zweite Halteteil einen zweiten Haltearm auf, die im Wesentlichen senkrecht zu einer Förderrichtung, vorzugsweise senkrecht zur Förderebene von den Halteteilen abstehen. Wenigstens eines der Halteteile weist dabei eine Umlenkung derart auf, dass die Haltearme in Förderrichtung nebeneinander zu liegen kommen, um das Einzelprodukt zwischen den Haltearmen aufnehmen zu können. Beispielsweise ragt der erste Haltearm unmittelbar senkrecht vom ersten Halteteil ab. Das zweite Halteteil weist eine Umlenkung für den zweiten Haltearm auf, beispielsweise in Form einer Umlenkstrebe, die einem Abstand zwischen der ersten Antriebsschiene und der zweiten Antriebsschiene entspricht, so dass der zweite Haltearm auf die Höhe der ersten Antriebsschiene und somit neben den ersten Haltearm gebracht werden kann. Alternativ ist es auch mögliche, den ersten Haltearm mittels einer Umlenkung auf die Höhe des zweiten Haltearms zu bringen. Oder jeder der Haltearme wird mittels einer Umlenkung zu seiner Antriebsschiene versetzt vorgesehen, so dass die beiden Haltearme zwischen den beiden Antriebsschienen in Förderrichtung nebeneinander zu liegen kommen.

Zum Festhalten klemmen die Haltearme ein Einzelprodukte zwischen ihren sich gegenüberliegenden Flächen ein. Hierfür ist keine Schwenkbewegung der Haltearme an den Halteteilen erforderlich. Zum Einklemmen werden die Halteteile mittels ihren Antrieben entlang der jeweiligen Antriebsschiene verfahren. Das erste Halteteil und das zweite Halteteil bilden eine Art Greifer zum Ergreifen der Einzelprodukte. Die Flächen der Haltearme können z. B. eine rutschfeste Oberfläche oder Beschichtung aufweisen, um den Klemmsitz durch Reibung zu unterstützen. Weiter können die Haltearme, bzw. die Halteflächen ein Profil aufweisen, das eine Angriffsfläche am Produkt erhöht. Beispielsweise können die Halteflächen ein rundes oder gewinkeltes Halteprofil aufweisen, das sich um ein Produkt legt, so dass dieses in der Rundung oder dem Winkel zu liegen kommt. Dabei können beide oder nur ein Haltearm ein solches Profil aufweisen. Grundsätzlich ist es auch denkbar, dass die Haltearme beweglich an den Halteteilen gelagert sind. Insbesondere können die Haltearme vorteilhaft höhenverstellbar mit unterschiedlichen Abständen zur ersten Antriebsschiene an der Halteeinrichtung gelagert sein und/oder teleskopisch senkrecht zur Förderrichtung ausfahrbar vorgesehen sein, um ein Erfassen von Produkten zu unterstützen. Auch ist es denkbar, die Haltearme drehbar auszugestalten, so dass eine Haltefläche durch Drehen des Haltearms gewechselt werden kann.

Bei einer vorteilhaften Ausführungsvariante einer Fördereinrichtung nach der Erfindung verläuft wenigstens eine Führungsleiste zwischen der ersten Antriebsschiene und der zweiten Antriebsschiene parallel zu den Antriebsschienen. Die wenigstens eine Führungsleiste kann beispielsweise an der gemeinsamen Tragstruktur befestigt sein. Das erste Halteteil und das zweite Halteteil weisen jeweils wenigstens ein Führungsstück auf, das zur Führung der Förderbewegung mit der Führungsleiste zusammenwirkt. Das heisst, die Antriebsschienen und die wenigstens eine Führungsleiste sind unabhängig und getrennt voneinander. Das Führungsstück ist beispielsweise als Rolle oder Gleitelement ausgebildet. Vorzugsweise greift ein erstes Führungsstück an einer ersten Seite der Führungsleiste und ein zweites Führungsstück an einer gegenüberliegenden zweiten Seite der Führungsleiste an. Das erste und das zweite Führungsstück können beispielsweise mittels eines Bügels in einem festen Abstand zueinander am Halteteil angeordnet sein. Beide Halteteile können sich an einer gemeinsamen Führungsleiste abstützen. Dabei sind beispielsweise die Führungsstücke versetzt entlang der Förderrichtung am jeweiligen Halteteil vorgesehen, so dass die Halteteil zumindest in einer Richtung unabhängig voneinander entlang der Führungsleiste beweglich bleiben.

Vorzugsweise weist die Fördereinrichtung eine erste Führungsleiste für das erste Halteteil und eine zweite Führungsleiste für das zweite Halteteil auf, wobei die erste und die zweite Führungsleiste parallel zueinander zwischen der ersten und der zweiten Antriebsschiene verlaufen. Die Halteteil sind somit frei um in jeder Richtung der Antriebsschiene unabhängig voneinander bewegt zu werden und können dabei von den Führungsleisten sicher geführt werden.

Bei noch einer weiteren Ausführungsform der Fördereinrichtung nach der vorliegenden Erfindung ist wenigstens einer der Antriebe als linearer Induktionsantrieb ausgebildet. Der Induktionsantrieb weist wenigstens eine Statorreihe entlang der ersten, bzw. zweiten Antriebsschiene und wenigstens eine Läufereinheit (Spulen) an dem ersten, bzw. zweiten Halteteil auf. Vorzugsweise sind der erste Antrieb und der zweite Antrieb als lineare Induktionsantriebe ausgebildet. Zur Ausgestaltung eines Induktionsantriebes weisen die Halteteile ein u-förmiges Halteelement mit parallel verlaufenden Schenkeln auf. Das Halteelement umgreift die Antriebsschiene derart, dass die Antriebsschiene mit der Statorreihe zwischen den Schenkeln zu liegen kommt und eine Läufereinheit an einer oder beiden Schenkeln gegenüber der Statorreihe angeordnet ist. Die Steuereinheit kann durch ein Antriebssteuersignal die Statorreihe beaufschlagen, so dass in bekannter Weise über die Läufereinheiten eine Antriebskraft auf das Halteteil einwirkt. Vorteilhaft sind dabei das erste und das zweite Halteteil an der wenigstens einen Führungsleiste abgestützt und berührungslos an der ersten, bzw. zweiten Antriebsschiene gelagert sind.

Grundsätzlich sind jedoch auch andere Antriebe möglich, wie etwa rotierende Elektroantriebe und dergleichen. In einer alternativen Variante der Fördereinrichtung nach der Erfindung dienen die erste Antriebsschiene und die zweite Antriebsschiene als Führungsschiene zur Führung von erstem und zweiten Halteteil. Die Antriebsschienen dienen somit sowohl zur Bereitstellung der Antriebskraft als auch zur Positionierung der Halteteile. Beispielsweise können die Antriebe als Band- oder Kettenantriebe ausgebildet sein, bei welchen ein Förderband oder eine Förderkette entlang einer Antriebsschiene verläuft oder als Antriebsschiene dient. Es sind zwei unabhängige parallel verlaufende Band- oder Kettenantriebe vorgesehen und die Halteteile der Halteeinrichtung sind an dem Förderband oder der Förderkette angeordnet.

Durch eine Fördereinrichtung und ein Förderverfahren nach der vorliegenden Erfindung können diverse Arten von Einzelprodukten gefördert werden. Dabei kann jedes Produkt unabhängig von einem vorhergehenden oder nachfolgenden Produkt bewegt werden. Die Produkte werden zuverlässig auch um Umlenksegmente der umlaufenden Förderstrecke geführt und sicher gehalten. Zudem können die Produkte schnell und präzise über weite Strecken gefördert werden. Die Fördereinrichtung weist eine kompakte und flexible Bauweise auf.

Die Erfindung wurde an Hand mehrerer Ausführungsformen dargestellt. Die einzelnen technischen Merkmale einer Ausführungsform können durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

### Kurzbeschreibung der Zeichnungen

Eine vorteilhafte Ausführungsform der Erfindung wird im Folgenden anhand der Figuren dargestellt, die lediglich zur Erläuterung dienen und nicht einschränkend auszulegen sind. Aus den Figuren offenbar werdende Merkmale der Erfindung sollen einzeln und in jeder Kombination als zur Offenbarung der Erfindung gehörend betrachtet werden. In den Figuren zeigen:
- Fig. 1: eine drei-dimensionale Teilansicht einer Ausführungsform einer Fördereinrichtung nach der vorliegenden Erfindung,
- Fig. 2: eine drei-dimensionale Darstellung einer Halteeinrichtung an der Fördereinrichtung aus Figur 1,
- Fig. 3: eine drei-dimensionale Ansicht von oben auf die Halteeinrichtung aus Figur 3 und
- Fig. 4: eine weitere drei-dimensionale Teilansicht der Fördereinrichtung aus Figur 1 von einer gegenüberliegenden Perspektive.

### Eine Bevorzugte Ausführungsform der Erfindung

Im Folgenden werden bestimmte Bezeichnungen aus praktischen Gründen verwendet und sind nicht einschränkend zu verstehen. Beispielsweise bezeichnen die Wörter "rechts", "links", "unten" und "oben" Richtungen in der Figuren, auf die Bezug genommen wird. Die Ausdrücke "innerhalb", "ausserhalb" "unterhalb", "oberhalb", "links", "rechts" oder ähnliche können zur Beschreibung der Anordnung oder Bewegung bezeichneter Bauteile relativ zueinander wie in den Figuren dargestellt verwendet werden. Derartige räumliche Relativangaben umfassen auch andere Positionen und Ausrichtungen als diejenigen, die in den Figuren gezeigt sind. Zum Beispiel wenn ein in den Figuren dargestelltes Element umgedreht wird, sind Bauteile oder Merkmale, die als "unterhalb" beschrieben sind, dann "oberhalb". Die Terminologie umfasst die oben ausdrücklich erwähnten Bezeichnungen, Ableitungen davon und Bezeichnungen ähnlicher Bedeutung.

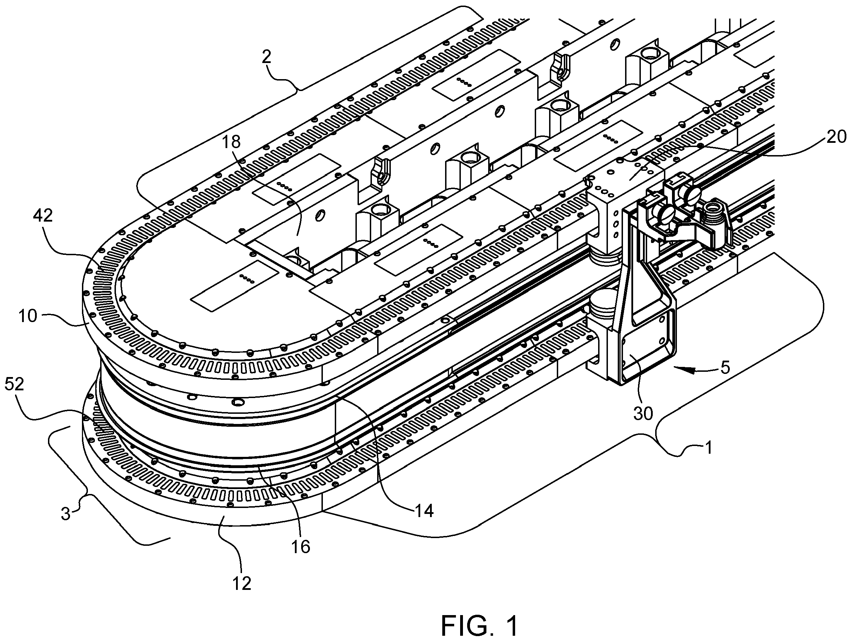

Figur 1 zeigt eine Ausführungsform einer Fördereinrichtung zum Fördern von Einzelprodukten entlang einer Förderstrecke nach der vorliegenden Erfindung. Die Fördereinrichtung weist eine umlaufende Förderstrecke auf. In Figur1 ist nur ein Ende der Förderstrecke gezeigt ist, wobei ein erstes Linearsegment 1, ein parallel dazu angeordnetes zweites Linearsegment 2 und ein zwischen den Linearsegmenten liegendes Biegesegment 3 dargestellt sind. Das Biegesegment 3 dient zur Umlenkung der Förderstrecke vom Linearsegment 1 zum Linearsegment 2. Ein gegenüberliegendes anderes Ende der Förderstrecke ist im Wesentlichen analog mit einem weiteren Biegesegment ausgebildet. Wie eingangs erwähnt, können auch mehr als zwei Linearsegmente vorgesehen werden, beispielsweise können drei Linearsegmente in einer Dreiecksgeometrie angeordnet sein. Der Verlauf der Förderstrecke kann somit flexibel an die Anforderungen einer Produktionslinie angepasst werden.

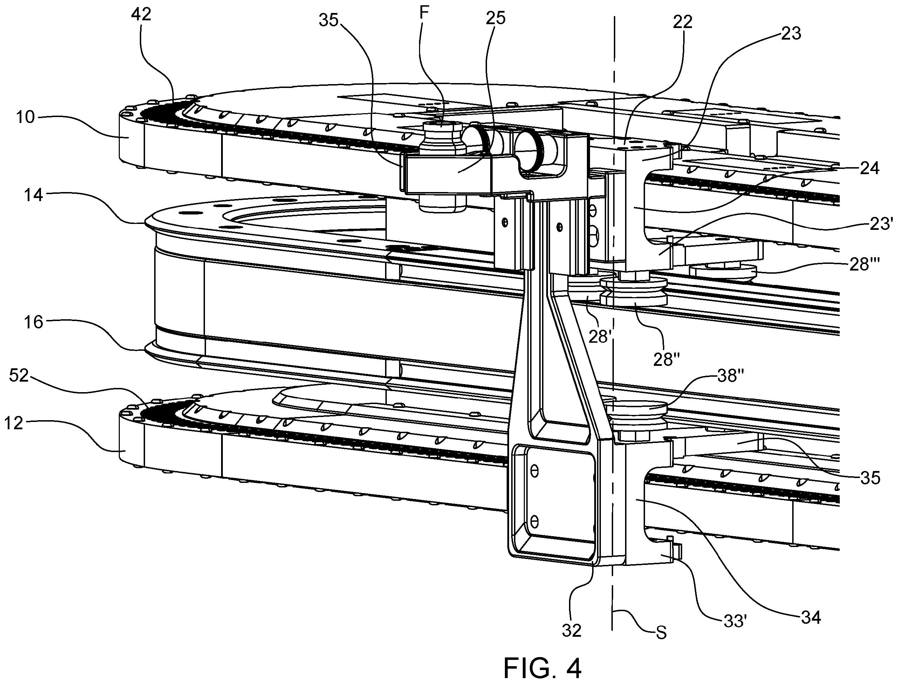

Wie in den Figuren 1 und 4 dargestellt, weist die Förderstrecke eine erste Antriebsschiene 10 und eine zweite Antriebsschiene 12 auf, die parallel verlaufend übereinander angeordnet sind. Im gezeigten Beispiel sind die beiden Antriebsschienen 10 und 12 horizontal ausgerichtet und definieren eine vertikale Antriebsebene, die entsprechend der Förderstrecke umlaufend ausgebildet ist. Zwischen der ersten Antriebsschiene 10 und der zweiten Antriebsschiene 12 sind eine erste Führungsleiste 14 und eine zweite Führungsleiste 16 angeordnet, die parallel zueinander und parallel zu den Antriebsschienen 10 und 12 verlaufen. Die erste und die zweiten Führungsleiste 14 und 16 sind relative zur Förderebene nach innen in versetzt angeordnet. Die erste Führungsleiste 14 erstreckt sich in einem gleichbleibenden definierten Abstand zur ersten Antriebsschiene 10 und die zweite Führungsleiste 16 erstreckt sich in einem gleichbleibenden definierten Abstand zur zweiten Antriebsschiene 12. Die Abstände müssen nicht identisch sein. Ferner liegen die erste und die zweite Antriebsschiene 10 und 12 in einem gleichbleibenden definierten Abstand und die Führungsleisten 14 und 16 sind ebenfalls in einem gleichbleibenden definierten Abstand. Die erste Antriebsschiene 10, die zweite Antriebsschiene 12, die erste Führungsleiste 14 und die zweie Führungsleiste 16 sind an einer gemeinsamen Tragstruktur 18 feststehend zueinander befestigt.

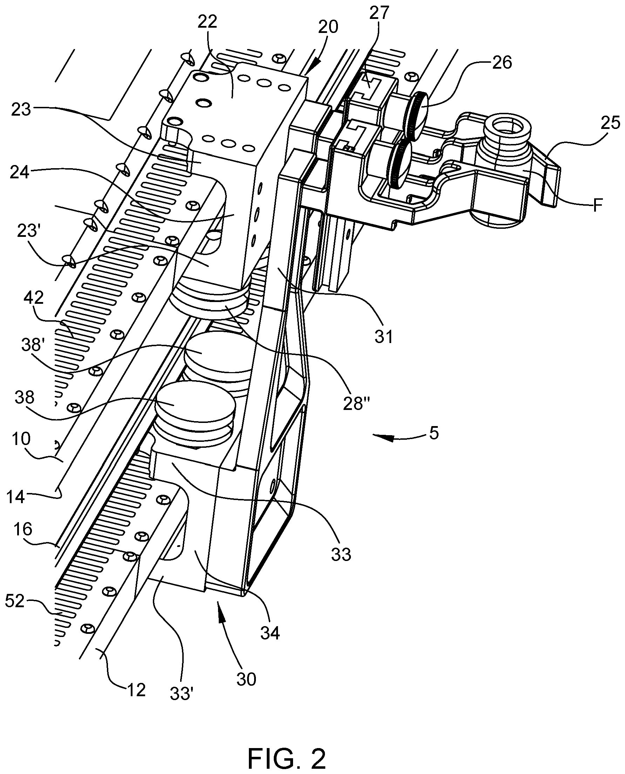

In Figur 1 ist eine zum Halten eines Einzelprodukts ausgebildete Halteeinrichtung 5 der Fördereinrichtung gezeigt. Es können jedoch mehrere solcher Halteeinrichtung entlang der Förderstrecke vorgesehen sein. Wie in Figur 2 ersichtlich, weist die Halteeinrichtung 5 ein erstes Halteteil 20 und ein zweites Halteteil 30 auf. Das erste Halteteil 20 weist ein u-förmiges erstes Haltelement 22 mit zwei U-Schenkeln 23 und 23' und einem U-Boden 24 auf. Das Halteelement 22 nimmt die erste Antriebsschiene 10 derart zwischen sich auf, dass einer der U-Schenkel 23 auf einer Oberseite der Antriebsschiene 10 und der andere der U-Schenkel 23'auf einer Unterseite der Antriebsschiene 10 zu liegen kommen. Der U-Boden 24, der die U-Schenkel verbindet, ist vor der Antriebsschiene 10 gelegen und verläuft vertikal zur Förderebene. Von dem Halteelement 22 ragt senkrecht zur Förderebene ein Haltearm 25 ab. Im gezeigten Beispiel ist der Haltearm 25 mit einer Schraube 26 an einer Halteschiene 27 befestigt, die am U-Boden 24 des Halteelements 22 angeordnet ist und senkrecht zur Förderrichtung, bzw. zur Antriebsschiene 10 und zur Führungsleiste 14 verläuft. Der Haltearm 25 ist verschieblich entlang der Halteschiene 27 gelagert und kann mit der Schraube 26 auf unterschiedlichen Höhen relativ zur Antriebsschiene 10 und zum Halteelement 22 befestigt werden.

Weiter weist das erste Halteteil 20 drei Führungsstücke 28 in Form von Rollen auf, wovon ein erstes Führungsstück 28' in Figur 2 sowie ein zweites Führungsstück 28'' und ein drittes Führungsstück 27‴ in Figur 4 gezeigt sind. Das erste Führungsstück 28' und das zweite Führungsstück 28' sind an einer Aussenseite des unteren U-Schenkels 23' des ersten Halteelements 22 derart angeordnet, dass sie sich an einer nach aussen von der Fördereinrichtung ausgerichteten Aussenseite der Führungsleiste 14 abstützen. Das dritte Führungsstück 28‴ ist an einer Verlängerung 29 vorgesehen, die sich zwischen der ersten Antriebsschiene 10 und der ersten Führungsleiste 14 über die Führungsleiste 14 erstreckt. Das dritte Führungsstück 28‴ ist derart an der Verlängerung 29 angeordnet, dass es sich an einer nach innen zur Fördereinrichtung ausgerichteten Innenseite der Führungsleiste 14 abstützt. Die Führungsstücke 28', 28" und 28‴ schliessen die Führungsleiste 14 passgenau zwischen sich ein, sodass das erste Halteteil 20 sicher von der Führungsleiste 14 geführt und gehalten wird. Hierfür weisen die Führungsstücke 27 eine v-förmige Rille am Aussenumfang auf, die auf einer v-förmigen Aussenkante der Führungsleiste 14 entlang der Förderrichtung abrollen kann. Die Führungsstücke 27 werden durch einen v-förmigen Passsitz an einer Bewegung senkrecht zur Förderrichtung blockiert. Das Halteteil 20, bzw. der Haltearm 25, werden somit sicher entlang der Führungsleiste 14 geführt und in ihrer relativen Position senkrecht zur Antriebsschiene 10 gehalten.

Das zweite Halteteil 30 ist grösstenteils analog zum ersten Halteteil 20 ausgebildet. Das heisst, das Halteteil 30 weist ein zweites u-förmiges Halteelement 32, eine Verlängerung 39 am Halteelement 32, Führungsstücke 38, eine Halteschiene 37, eine Schraube 36 und einen Haltearm 35 auf. Das Halteelement 32 nimmt die zweite Antriebsschiene 12 zwischen einem U-Schenkel 33, der auf einer Oberseite der Antriebsschiene 12 liegt, und einem U-Schenkel 33', der auf einer Unterseite der Antriebsschiene 12 liegt, auf. Ein U-Boden 34, der die U-Schenkel 33 und 33' verbindet, ist vor der Antriebsschiene 12 gelegen und verläuft vertikal zur Förderebene. Die Halteelemente 22 und 32 umfassen die Antriebsschiene 10 und 12 somit an drei Seiten.

Ein erstes Führungsstück 38' und ein zweites Führungsstück 38' sind an einer Aussenseite des oberen U-Schenkels 33 des zweiten Halteelements 32 angeordnet und stützen sich an einer vorderen Seite der Führungsleiste 16 ab. Ein drittes Führungsstück 28‴ ist an der Verlängerung 39 vorgesehen, die sich zwischen der zweiten Führungsleiste 16 und der zweiten Antriebsschiene 12 erstreckt. Das dritte Führungsstück 38‴ ist derart an der Verlängerung 39 angeordnet, dass es sich an einer hinteren Seite der Führungsleiste 16 abstützt. Die Führungsstücke 38', 38" und 38‴ schliessen die Führungsleiste 16 passgenau zwischen sich ein, sodass das zweite Halteteil 30 sicher von der Führungsleiste 16 geführt und gehalten wird. Dabei weisen die Führungsstücke 38 eine v-förmige Rille am Aussenumfang und die Führungsleiste 16 eine v-förmige Aussenkante auf, um einen v-förmigen Passsitz auszubilden. Das Halteteil 30 wird entlang der Führungsleiste 16 geführt und in seiner relativen Position senkrecht zur Antriebsschiene 12 stabil gehalten.

Der Haltearm 35 des zweiten Halteteils 30 ist an einer Strebe 31 vorgesehen, die von einer Aussenseite des U-Bodens 34 parallel zu diesem in Richtung des ersten Halteteils 20 abragt. Die Strebe 31 bildet eine Umlenkung für den Haltearm 35. Die Strebe 31 verläuft berührungslos parallel zum U-Boden 24 des ersten Halteteils 20 und endet circa auf der Höhe des oberen U-Schenkels 23 des ersten Halteteils 20. Mittels der Strebe 31 ist der Haltearm 35 in einem Abstand A vom U-Boden 24 des ersten Halteteils 20 beabstandet. Die Halteschiene 37 ist am Ende der Strebe 31 angeordnet und der Haltearm 35 ist verschieblich in der Strebe 31 gelagert, so dass der Haltearm 35 am Ende der Strebe 31 senkrecht zur Förderebene abragt. Der Haltearm 35 wird mit der Schraube 36 an der Halteschiene 37 derart befestigt, dass er in der Förderebene auf gleicher Höhe wie der erste Haltearm 25 liegt und parallel zur Förderrichtung neben dem ersten Haltearm 25 zu liegen kommt. Das Halteteil 30, bzw. der Haltearm 35, werden durch den Passsitz zwischen der zweiten Führungsleiste 16 und den Führungsstücken 38 sicher entlang der Führungsleiste 16 geführt und in ihrer relativen Position zum Haltearm 25 gehalten.

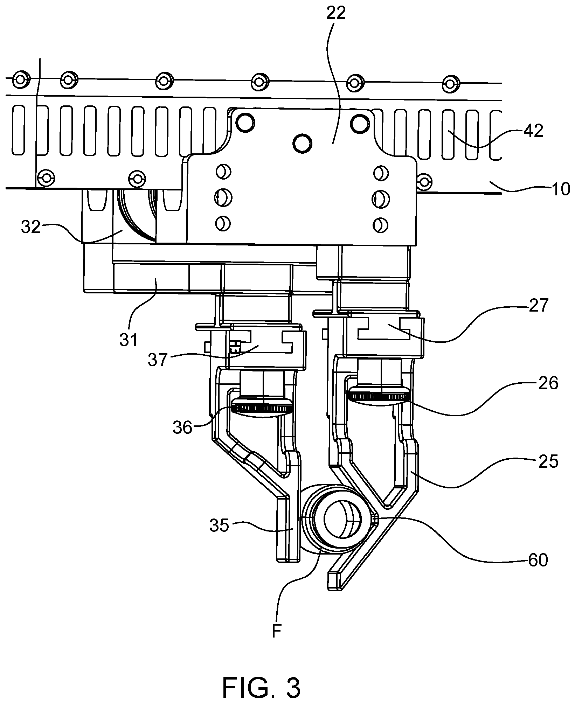

Der erste Haltearm 25 und der zweite Haltearm 35 ragen senkrecht zur Förderebene auf gleicher Höhe nach aussen vom ersten Halteteil 20 bzw. von der Strebe 31 des zweiten Halteteils 30 ab. Sie liegen somit horizontal nebeneinander, so dass sie ein Einzelprodukt zwischen sich einklemmen können. Der erste und der zweite Haltearm 25 und 35 bilden somit eine Art Greifer der Halteeinrichtung 5 zum Halten eines Einzelprodukts, wie etwa einer Flasche F. Dabei werden das erste Halteteil 20 und das zweite Halteteil 30 an den Führungsleisten 14 und 16 geführt und sind entlang der Antriebsschienen 10 und 12 beweglich gelagert. Der Passsitz zwischen den Führungsleisten 14 und 16 und den Führungsstücken 28 und 38 sorgt dafür, dass der erste und der zweite Haltearm 25 und 35 zuverlässig auf gleicher Höhe relative zu den Antriebsschienen 10 und 12 gehalten werden. Erfindungsgemäss sind das erste Halteteil 20 und das zweite Halteteil 30 dabei ohne Kontakt miteinander an der ersten 10, bzw. zweiten Antriebsschiene 12, gelagert, wie aus den Figuren 2 und 3 ersichtlich ist.

Wie in Figur 3 gezeigt ist, weist der Haltearm 20 auf seiner dem Haltearm 30 gegenüberliegenden Seite einen Winkel 60 auf. Das Einzelprodukt, wie etwa eine runde Flasche F, kann bei dieser Ausgestaltung von drei Seiten gehalten werden und ist somit gegen ein Verrutschen entlang der Haltearme gesichert. Ferner ist aus Figur 3 ersichtlich, dass das Einzelprodukt die einzige beweglich Verbindung zwischen dem ersten Halteteil 20 und dem zweiten Halteteil 30 herstellt.

Nach der Erfindung weist das erste Halteteil 20 einen ersten Antrieb 40 und das zweite Halteteil 30 weist einen zweiten Antrieb 50 auf, wobei der erste Antrieb 40 das erste Halteteil 20 entlang der ersten Antriebsschiene 10 und der zweite Antrieb 50 das zweite Halteteil 30 entlang der zweiten Antriebsschiene 12 unabhängig voneinander antreibt. In dieser Ausführungsform der Fördereinrichtung nach der Erfindung sind die Antriebe 40 und 50 als linearere Induktionsantriebe ausgebildet. Der erste Antrieb 40 weist eine erste Statorreihe 42 entlang der Antriebsschiene 10 und mehrere Läufereinheiten (nicht gezeigt), auch Mover genannt, in Form von Spulen am ersten Halteteil 20 auf. Die Statorreihe 42 ist auf einer oberen Seite der Antriebsschiene 10 umlaufend um die Förderstrecke vorgesehen. Die Läufereinheiten sind auf einer Innenseite des U-Schenkels 23 angeordnet, welche der Oberseite der Antriebsschiene 10 und somit der Statorreihe 42 gegenüberliegt. In gleicher Weise ist eine zweite Statorreihe umlaufend auf einer unteren Seite der Antriebsschiene 10 und sind Läufereinheiten auf einer Innenseite des U-Schenkels 23', welche der Unterseite der Antriebsschiene 10 gegenüberliegt liegt, vorgesehen. In analoger Ausgestaltung weist der Antrieb 50 eine erste Statorreihe 52 und eine zweite Statorreihe entlang der Ober- bzw. Unterseite der Antriebsschiene 12 und mehrere Läufereinheiten an den U-Schenkeln 33 und 33' am zweiten Halteteil 30 auf. Bei den Induktionsantrieben 40 und 50 liegen die Läufereinheiten und Statorreihen zu beiden Seiten der jeweiligen Antriebsschiene 10, bzw. 12, wodurch eine gleichmässige Antriebskraft in Richtung der Förderrichtung entlang der Antriebsschienen 10 und 12 auf die Halteteile 20 und 30 unabhängig voneinander ausgeübt werden kann. Dabei werden die Halteteile 20 und 30 entlang den Führungsleisten 14 und 16 geführt. Durch die Antriebe 40 und 50 können die Halteteile 20 und 30, respektive die Haltearme 25 und 35, in und entgegen der Förderrichtung aufeinander zu und voneinander weg bewegt werden. Das erste Halteteil 20 und das zweite Halteteil 30 sind relativ zueinander zwischen einer Halteposition, in der sie ein Einzelprodukt zwischen sich festklemmen, und einer Freigabeposition, in ein Einzelprodukt losgelassen ist, beweglich. Ein Kontakt der Halteteile 20 und 30 ist dabei nicht erforderlich.

Um auf die Halteeinrichtung unterschiedliche Formen von Einzelprodukten abzustimmen, können die Haltearme 25 und 35 entlang der Halteschienen 27 und 37 verschoben werden. Auch ist es möglich die Haltearme drehbar zu lagern, um unterschiedlich Anliegeflächen der Haltearme in Richtung des Einzelprodukts ausrichten zu können. Letztlich können auch verschieden ausgeformte Haltearme an den Halteschienen 27 und 37, bzw. Halteteilen 20 und 30 befestigt werden.

Zur Steuerung der Antriebe 40 und 50 weist die Fördereinrichtung eine Steuereinheit (nicht gezeigt) auf, die eine Bewegung des ersten Halteteils 20 und des zweiten Halteteils 30 aufeinander abgestimmt steuert. Die Steuereinheit kann von einem Computer gebildet werden, auf dem ein Steueralgorithmus in Form eines Computerprogramms ausführbar ist. Der Steueralgorithmus kann auf einem geeigneten Medium gespeichert sein und von diesem betrieben werden, wie beispielsweise auf einem optischen Speichermedium oder einem Festmedium, das zusammen mit oder als Teil von anderer Hardware des Computer bereitgestellt wird. Insbesondere kann das Computerprogramm dazu ausgestaltet sein, ein Förderverfahren zu implementieren, insbesondere das erfindungsgemässe Förderverfahren.

Eine Sensorik (nicht gezeigt) kann eine erste Sensoreinheit am ersten Halteteil 20 und eine zweite Sensoreinheit am zweiten Halteteil 30 umfassen. Weiter kann die Sensorik Sensoreinheiten z. B. an den Antriebsschienen 10 und 12 und den Führungsleisten 14 und 16 aufweisen. Mittels der Sensorik kann in üblicherweise eine Position und Geschwindigkeit und Klemmkraft von erstem und zweitem Halteteil 20 und 30 relativ zueinander und relativ zu den Antriebsschienen 10 und 12 bzw. den Führungsleisten 14 und 16 erfasst und als Sensorsignal in Form eines Eingabesignals an die Steuereinheit übermittelt werden.

Bei einem Förderverfahren nach der Erfindung sendet die Steuereinrichtung in Abhängigkeit der Sensorsignale ein Steuersignal als Ausgabesignal an die Antriebe 40 und 50. Zur Ausbildung einer Halteposition der Halteeinrichtung 5 steuert die Steuereinrichtung den ersten Antrieb 40 zum Antreiben des ersten Halteteils 20 entlang der ersten Antriebsschiene 10 und den zweiten Antrieb 50 zum Antreiben des zweiten Halteteils 30 entlang der zweiten Antriebsschiene 12 derart, dass ein Einzelprodukt zwischen dem ersten Halteteil 20 und dem zweiten Halteteil 30 im Klemmsitz zwischen den Haltearmen 25 und 35 gehalten wird. Zum Fördern des Einzelprodukts entlang der Förderstrecke der Fördereinrichtung werden die Antriebe 40 und 50 von der Steuereinheit derart angesteuert, dass die Halteteile 20 und 30 synchron miteinander entlang der jeweiligen Antriebsschiene verfahren werden. Somit sind die Halteteile relativ zueinander zwischen der Halteposition und der Freigabeposition beweglich und können in der Halteposition gemeinsam entlang der Förderstrecke angetrieben werden, ohne dass die Halteteile mechanisch gekoppelt sind oder sich berühren müssen.

Die geometrische Anordnung des ersten Haltearms 25 am ersten Halteteil 20, sowie der Strebe 31 und des zweiten Haltearms 35 am zweiten Halteteil 30 ist vorzugsweise derart abgestimmt, dass die Haltearme 25 und 35 parallel nebeneinander zu liegen kommen, wie oben beschrieben. Gleichzeitig sind das erste Halteteil 20 und das zweite Halteteil 30 in einer Halteposition auf einer zur ersten Antriebsschiene 10 und zur zweiten Antriebsschiene 12 zumindest annähernd senkrechten Verbindungslinie S angeordnet, wenn die Halteeinrichtung in der Halteposition ist. Das heisst, die Halteteile liegen derart senkrecht übereinander, dass die Führungsstücke der beiden Halteteile gleichzeitig ein Biegesement der Förderstrecke erreichen und durchlaufen und somit eine Kurvenbewegung der Halteteile gleichzeitig eingeleitet und durchgeführt wird. Dadurch kann ein Aufspreizen der Haltearme im Biegesegment vermieden werden und das Einzelprodukt wird auch im Biegebereich der Förderstrecke sicher gehalten. Die Lage der Halteteile kann dabei geringfügig von der senkrechten Verbindungslinie abweichen, beispielsweise werden Abweichung von etwas 5-10 mm toleriert, ohne dass der Klemmsitz in einem Biegesegment beeinträchtigt wird. In einer Freigabeposition ist zumindest eines der Halteteile versetzt neben der senkrechten Verbindungslinie S angeordnet, wodurch sich der Abstand zwischen den Haltearmen 25 und 35 vergrössert.

Anhand der Figuren wurde ein Ausführungsbeispiel einer Fördereinrichtung nach der vorliegenden Erfindung im Detail beschrieben. Grundsätzlich sind aber auch Abwandlungen und alternative Ausgestaltungen im Rahme des Erfindungsgedanken möglich, wie eingangs beschrieben. Beispielsweise kann eine Führung der Halteeinrichtung entlang der Antriebsschienen, insbesondere die Führungsleisten, alternative Ausgestaltungen aufweisen. Beispielsweise können Gleitschuhe als Führungsstücke verwendet werden, die in Gleitschienen verlaufen. Weiter können andere Arten von Antrieben verwendet werden, wie etwa Band- oder Kettenantriebe, ohne vom Erfindungsgedanken unabhängig antreibbarer Halteteile einer Halteeinrichtung zur Ausbildung eines Klemmsitzes zum Halten von Einzelprodukten abzuweichen.

In jedem Fall können mit der Fördereinrichtung nach der Erfindung eine Vielzahl von Einzelprodukten in einer Vielzahl von Halteeinrichtungen unabhängig voneinander erfasst, bewegt und freigegeben werden. Da sich die Halteteile der Halteeinrichtung nicht berühren, wird die Steuerung der Fördereinrichtung vereinfacht und es wird Bauraum eingespart. Auch eine Wartung der Fördereinrichtung wird damit unterstützt. Die Halteeinrichtung können auf unterschiedliche Arten von Einzelprodukten abgestimmt werden, ohne in die Ausgestaltung der Halteeinrichtung eingreifen zu müssen.

**Bezugszeichen**

| | | | |
|---|---|---|---|
| 1 | erstes Linearsegment | 30 | zweites Halteteil |
| 2 | zweites Linearsegment | 31 | Strebe |
| 3 | Biegesegment | 32 | zweites Halteelement |
| 5 | Halteeinrichtung | 33, 33' | U-Schenkel |
| 10 | erste Antriebsschiene | 34 | U-Boden |
| 12 | zweite Antriebsschiene | 35 | Haltearm |
| 14 | erste Führungsleiste | 36 | Schraube |
| 16 | zweite Führungsleiste | 37 | Halteschiene |
| 18 | Tragstruktur | 38', 38", 38‴ | Führungsstück |
| 20 | erstes Halteteil | 40 | erster Antrieb |
| 22 | erstes Halteelement | 42 | Statorreihe |
| 23, 23' | U-Schenkel | 50 | zweiter Antrieb |
| 24 | U-Boden | 52 | Statorreihe |
| 25 | Haltearm | 60 | Winkel |
| 26 | Schraube | | |
| 27 | Halteschiene | A | Abstand |
| 28', 28", 28‴ | Führungsstück | | |
| 29 | Verlängerung | | |

## Patentansprüche

1. Fördereinrichtung zum Fördern von Einzelprodukten entlang einer Förderstrecke, die wenigstens eine Halteeinrichtung (5) zum Halten eines Einzelprodukts aufweist, wobei die Halteeinrichtung (5) entlang einer Antriebsschiene beweglich gelagert ist und mittels eines Antriebs antreibbar ist, **dadurch gekennzeichnet, dass**
- die Halteeinrichtung (5) ein erstes Halteteil (20) und ein zweites Halteteil (30) umfasst, die relativ zueinander zwischen einer Halteposition und einer Freigabeposition beweglich sind,
- die Förderstrecke eine erste Antriebsschiene (10) und eine zweite Antriebsschiene (12) aufweist, die parallel verlaufend angeordnet sind,
- das erste Halteteil (20) mit einem ersten Antrieb (40) entlang der ersten Antriebsschiene (10) und das zweite Halteteil (30) mit einem zweiten Antrieb (50) entlang der zweiten Antriebsschiene (12) verfahrbar ist,
- wobei der erste Antrieb (40) und der zweite Antrieb (50) mittels einer Steuereinheit derart steuerbar sind, dass das erste Halteteil (20) und das zweite Halteteil (30) relativ zueinander zwischen der Halteposition und der Freigabeposition beweglich sind und in der Halteposition gemeinsam entlang der Förderstrecke beweglich sind.

2. Fördereinrichtung nach Anspruch 1, **dadurch gekennzeichnet, dass** das erste Halteteil (20) und das zweite Halteteil (30) ohne Kontakt miteinander an der ersten, bzw. zweiten Antriebsschiene (10, 12) gelagert sind.

3. Fördereinrichtung nach Anspruch 1 oder 2, **dadurch gekennzeichnet, dass** das erste Halteteil (20) und das zweite Halteteil (30) in einer Halteposition auf einer zur ersten Antriebsschiene (10) und zur zweiten Antriebsschiene (12) zumindest annähernd senkrechten Verbindungslinie angeordnet sind.

4. Fördereinrichtung nach dem vorhergehenden Anspruch,
**dadurch gekennzeichnet, dass** die Förderstrecke als umlaufende Strecke mit wenigstens zwei parallel verlaufenden Linearsegmenten (1, 2) und wenigstens zwei Umlenksegmenten (3) ausgebildet ist.

5. Fördereinrichtung nach dem vorhergehenden Anspruch,
**dadurch gekennzeichnet, dass** mehrere Halteeinrichtungen (5) vorgesehen sind, die zueinander unabhängig verfahrbar sind.

6. Fördereinrichtung nach einem der vorhergehenden Ansprüche, **dadurch gekennzeichnet, dass** die erste Antriebsschiene (10) und die zweite Antriebsschiene (12) an einer gemeinsamen Tragstruktur (18) zueinander feststehend vorgesehen sind.

7. Fördereinrichtung nach einem der vorhergehenden Ansprüche, **dadurch gekennzeichnet, dass** das erste Halteteil (20) einen ersten Haltearm (25) und das zweite Halteteil (30) einen zweiten Haltearm (35) aufweisen, die im Wesentlichen senkrecht zu einer Förderrichtung von den Halteteilen (20, 30) abstehen, wobei wenigstens eines der Halteteile eine Umlenkung (31) derart aufweist, dass die Haltearme (in 25, 35) nebeneinander zu liegen kommen.

8. Fördereinrichtung nach einem der vorhergehenden Ansprüche, **dadurch gekennzeichnet, dass** eine Sensorik mit einem ersten Wegmesssystem am ersten Antrieb (40) und einem zweiten Wegmesssystem am zweiten Antrieb (50) zur Positionsbestimmung und/oder Geschwindigkeitsbestimmung von erstem und zweitem Halteteil (20, 30) relativ zueinander vorgesehen ist.

9. Fördereinrichtung nach einem der vorhergehenden Ansprüche, **dadurch gekennzeichnet, dass** wenigstens einer der Antriebe (40, 50) als linearer Induktionsantrieb ausgebildet ist, wobei wenigstens eine Statorreihe (42, 52) entlang der ersten, bzw. zweiten Antriebsschiene (10, 12) und wenigstens eine Läufereinheit an dem ersten, bzw. zweiten Halteteil (20, 30) vorgesehen sind.

10. Fördereinrichtung nach dem vorhergehenden Anspruch,
**dadurch gekennzeichnet, dass** wenigstens eine Führungsleiste (14) zwischen der ersten Antriebsschiene (10) und der zweiten Antriebsschiene (12) parallel zu diesen verläuft und das erste Halteteil (20) und das zweite Halteteil (30) jeweils wenigstens ein Führungsstück (28, 38) aufweisen, das zur Führung der Förderbewegung mit der Führungsleiste (14) zusammenwirkt.

11. Fördereinrichtung nach dem vorhergehenden Anspruch,
**dadurch gekennzeichnet, dass** das erste und das zweite Halteteil (20, 30) an der wenigstens einen Führungsleiste (14) abgestützt sind und berührungslos an der ersten, bzw. zweiten Antriebsschiene (10, 12) gelagert sind.

12. Fördereinrichtung nach einem der Ansprüche 10 oder 11, **dadurch gekennzeichnet, dass** eine erste Führungsleiste (14) für das erste Halteteil (20) und eine zweite Führungsleiste (16) für das zweite Halteteil (30) vorgesehen sind, wobei die erste und die zweite Führungsleiste (14, 16) parallel zueinander zwischen der ersten und der zweiten Antriebsschiene (10, 12) verlaufen.

13. Fördereinrichtung nach einem der vorhergehenden Ansprüche, **dadurch gekennzeichnet, dass** die erste Antriebsschiene (10) und die zweite Antriebsschiene (12) als Führungsschiene zur Führung von erstem und zweiten Halteteil dienen.

14. Förderverfahren zum Fördern von Einzelprodukten entlang einer Fördereinrichtung, die eine Förderstrecke und wenigstens eine Halteeinrichtung zum Halten eines Einzelprodukts nach einem der Ansprüche 1 bis 13 aufweist, wobei eine Steuereinrichtung einen ersten Antrieb (40) zum Antreiben des ersten Halteteils (20) entlang der ersten Antriebsschiene (10) und einen zweiten Antrieb (50) zum Antreiben des zweiten Halteteils (30) entlang der zweiten Antriebsschiene (12) derart steuert, dass die Halteteile (20, 30) synchron miteinander derart auf den Antriebsschienen (10, 12) verfahren werden, dass das Einzelprodukt zwischen dem ersten Halteteil (20) und dem zweiten Halteteil (30) in einer einen Klemmsitz ausbildendenden Halteposition gehalten wird.

15. Förderverfahren zum Fördern von Einzelprodukten nach Anspruch 14, wobei die Steuereinrichtung ein erstes Sensorsignal von einer ersten Sensoreinheit am ersten Halteteil (20) zu einer Position und/oder Geschwindigkeit des ersten Halteteils (20) relative zur ersten Antriebsschiene (10) und/oder relativ zum zweiten Halteteil (30) und/oder ein zweites Sensorsignal von einer zweiten Sensoreinheit am zweiten Halteteil (30) zu einer Position und/oder Geschwindigkeit des zweiten Halteteils (30) relative zur zweiten Antriebsschiene (12) und/oder relativ zum ersten Halteteil (20) empfängt und eine Geschwindigkeit des ersten und des zweiten Halteteils (20, 30) derart abstimmt, dass eine Klemmkraft auf den Einzelbehälter erfolgt.
